# DEMANDE DE BREVET EUROPEEN

(11) **EP 1 177 937 A1**
(43) Date de publication de la demande: **06.02.2002**
(21) Numéro de dépôt: 01402088.7
(22) Date de dépôt: 01.08.2001
(51) Int. Cl.: B60N 2/46

(54) **Accoudoir creux pour porte de véhicule automobile**

(30) Priorité: 02.08.2000 FR 0010213
(71) Demandeur: Faurecia Industries, 92100 Boulogne-Billancourt (FR)
(72) Inventeur: Heranney, Yves, 25200 Montbeliard (FR)
(74) Mandataire: Blot, Philippe Robert Emile

(57) **Abrégé**

Accoudoir destiné à être fixé à une paroi intérieure de véhicule automobile, comportant une coque rigide creuse (13) définissant une face supérieure d'appui (15), une face inférieure (16), une première face latérale (17) destinée à coopérer avec la paroi du véhicule, et une deuxième face latérale opposée à la première, tournée vers l'intérieur du véhicule, caractérisé en ce que la deuxième face latérale présente une ouverture (27) s'étendant sur l'essentiel de ladite face et donnant un accès au volume intérieur (25) de l'accoudoir (5), et l'accoudoir (5) comporte un organe amovible d'obturation de ladite ouverture.

## Description

La présente invention concerne un accoudoir destiné à être fixé à une paroi intérieure de véhicule automobile, comportant une coque rigide creuse définissant une face supérieure d'appui, une face inférieure, une première face latérale destinée à coopérer avec la paroi du véhicule, et une deuxième face latérale opposée à la première, tournée vers l'intérieur du véhicule.

Un but principal de l'invention est de proposer un accoudoir dont le volume soit particulièrement bien valorisé.

A cet effet, suivant l'invention, la deuxième face latérale présente une ouverture s'étendant sur l'essentiel de ladite face et donnant un accès au volume intérieur de l'accoudoir, et l'accoudoir comporte un organe amovible d'obturation de ladite ouverture.

Suivant d'autres caractéristiques de l'invention :
- l'accoudoir comporte un revêtement couvrant au moins partiellement la coque rigide, et l'organe amovible d'obturation est formé par une partie du revêtement ;
- le revêtement comprend une première partie fixée sur la face supérieure de la coque, et une deuxième partie formant ledit organe d'obturation, ladite deuxième partie étant fixée de façon détachable à la coque rigide par des moyens de fixation libérables ;
- le revêtement est réalisé dans un matériau souple en feuille ; et
- les moyens de fixation libérables sont constitués d'au moins un bouton-pression.

L'invention vise également une porte de véhicule automobile comportant une paroi intérieure sur laquelle est fixée une garniture d'habillage, et comportant un accoudoir rapporté tel que décrit précédemment, ladite porte étant caractérisée en ce que l'accoudoir est fixé à la paroi intérieure par des moyens de fixation et de positionnement accessibles et manoeuvrables par un utilisateur à travers le volume intérieur de l'accoudoir.

De façon avantageuse, les moyens de fixation et de positionnement de l'accoudoir comprennent un organe solidaire de la paroi destinée à coopérer de façon détachable avec un organe complémentaire solidaire de l'accoudoir, ledit organe complémentaire étant susceptible de prendre plusieurs positions sur l'accoudoir par engagement dans des trous ménagés dans la coque de façon à définir plusieurs positions relatives des deux organes, et adapté pour être déplacé d'une position à une autre par l'action d'un utilisateur, à travers le volume intérieur de l'accoudoir.

Des exemples de réalisation de l'invention vont maintenant être décrits en regard des dessins annexés, sur lesquels :
- la Figure 1 est une vue en plan schématique, depuis l'intérieur, d'une porte de véhicule automobile équipée d'un accoudoir suivant l'invention ;
- la Figure 2 est une section suivant la ligne 2-2, à plus grande échelle, de l'accoudoir et d'une partie de la porte représentée à la Figure 1 ;
- la Figure 2a montre, à plus grande échelle, le détail A de la Figure 2 ;
- la Figure 3 est une section suivant la ligne 3-3, à plus grande échelle, de l'accoudoir et d'une partie de la porte représentée à la Figure 1 ;
- la Figure 4 est une vue en perspective éclatée de la poignée de préhension de l'accoudoir représenté sur les Figures précédentes et du mécanisme de liaison de cette poignée à une plaque de fixation solidaire de la porte.

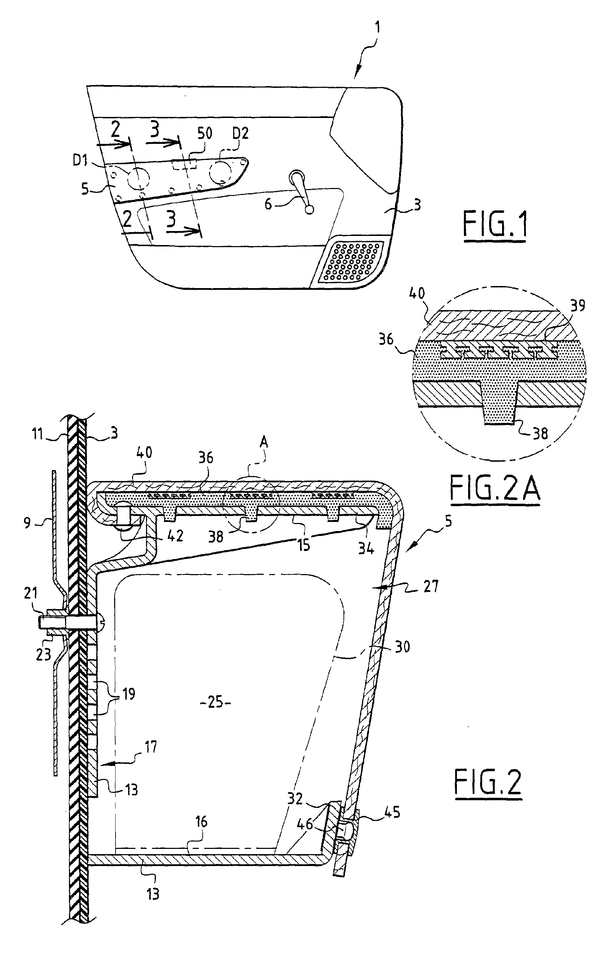

A la Figure 1, on a représenté schématiquement une porte 1 de véhicule automobile, recouverte du côté de l'intérieur du véhicule d'une garniture d'habillage 3, réalisée par exemple en matériau plastique rigide moulé, et comportant de ce même côté un accoudoir 5 et d'autres accessoires tels qu'une poignée de lève-vitre 6.

Comme il sera mieux vu à la Figure 2, la porte présente une paroi intérieure métallique (non représentée) sensiblement verticale, à laquelle est fixée rigidement une doublure constituée d'une plaque métallique de fixation 9 essentiellement verticale. La paroi et la garniture 3 sont séparées par une feuille d'étanchéité 11 réalisée dans un matériau synthétique souple, et solidarisées par des rivets ou tout autre moyen classique, non représentés.

L'accoudoir 5 présente une coque rigide creuse 13 comportant une paroi supérieure d'appui 15 sensiblement horizontale lorsque l'accoudoir 5 est fixé à la paroi du véhicule, une paroi inférieure 16 sensiblement horizontale également, et une paroi latérale de fixation destinée à coopérer avec la garniture d'habillage 3 en étant rigidement liée à la plaque de fixation 9.

La paroi latérale 17 présente une série de trous 19 décalés sur un axe sensiblement vertical, destinés à recevoir une vis de fixation 21. La plaque de fixation 9 présente une perforation dans laquelle est logée une douille taraudée 23, placée en regard d'une ouverture de passage de vis pratiquée dans la feuille d'étanchéité 11 et la garniture d'habillage 3. La position de l'accoudoir 5 par rapport à la plaque de fixation 9 est donc déterminée par le trou 19 dans lequel est reçue la vis de fixation 21, la vis 21 étant vissée dans la douille taraudée 23. La tête de la vis 21 prend appui sur la face interne de la paroi latérale 17 de la coque rigide 13, et se situe dans le volume intérieur 25 de l'accoudoir 5.

Du côté opposé à la paroi latérale de fixation 17, la coque rigide 13 de l'accoudoir 5 présence une ouverture 27 qui s'étend sur l'essentiel de la hauteur de l'accoudoir et sur l'essentiel de sa longueur. Cette ouverture 27 donne ainsi à un utilisateur placé dans le véhicule, un libre accès au volume intérieur 25 de l'accoudoir 5, ce qui lui permet de manoeuvrer la vis de fixation 21 pour, par exemple, la placer dans un trou 19 de son choix et modifier la position verticale de l'accoudoir 5 par rapport à la porte, ou encore placer un objet dans le volume intérieur 25. Un tel objet a été représenté sous la référence 30 et peut être constitué par exemple d'une trousse médicale ou de tout autre objet adapté, notamment d'encombrement relativement important, puisque le volume intérieur 25 offert par l'accoudoir peut avoir des dimensions importantes. L'objet 30 peut reposer par sa base sur la paroi inférieure 16 et être maintenu, du fait de la planéité de cette paroi inférieure 16, dans une position convenable.

L'ouverture 27 est délimitée par un rebord inférieur 32 attenant à la paroi inférieure 16, et un rebord supérieur 34 attenant à la paroi supérieure 15.

La face externe de la paroi supérieure 15 est recouverte d'une plaque 36 d'un matériau synthétique souple (par exemple de la mousse polyuréthane).

Comme cela est visible sur le détail agrandi de la Figure 2, la plaque souple 36 comporte des picots 38 insérés dans des trous traversants de la paroi supérieure 15 de la coque rigide 13 de façon à fixer la plaque souple 36 sur la paroi supérieure 15. Au droit de ces picots 38, sur la surface externe de la plaque souple 36, sont disposées des plaquettes auto-agrippantes 39.

Les faces visibles de l'accoudoir 5 sont recouvertes par une feuille de revêtement 40, réalisée par exemple en cuir ou en matériau synthétique. La feuille de revêtement 40 est fixée à la paroi supérieure 15 en plusieurs point situés au voisinage de l'un de ses bords, au moyen de rivets 42 coopérant avec la paroi supérieure 15 dans une région non visible par un utilisateur, située au voisinage de la paroi latérale de fixation 17. La feuille de revêtement 40 recouvre complètement la plaque souple 36 en s'y accrochant de façon détachable grâce aux plaquettes auto-agrippantes 39, et s'étend jusqu'au rebord inférieur 32 de façon à obturer l'ouverture 27.

Le bord de la feuille de revêtement 40 destiné à coopérer avec le rebord inférieur 32 de la coque rigide 13 est pourvu d'une série de parties femelles 45 de boutons-pressions coopérant avec des contreparties mâles 46 correspondantes, saillantes du rebord inférieur 32.

La feuille de revêtement 40 constitue de ce fait un revêtement d'aspect de l'accoudoir 5, en même temps qu'un organe d'obturation amovible de l'ouverture 27.

Le dispositif de fixation de l'accoudoir sur la plaque de fixation 9, qui vient d'être décrit en référence à la Figure 2, correspond à la zone désignée par la référence D1 sur la Figure 1 et située au voisinage de la première extrémité de l'accoudoir 5, ce dispositif étant reproduit de façon identique dans la zone désignée par D2 à l'autre extrémité de l'accoudoir 5.

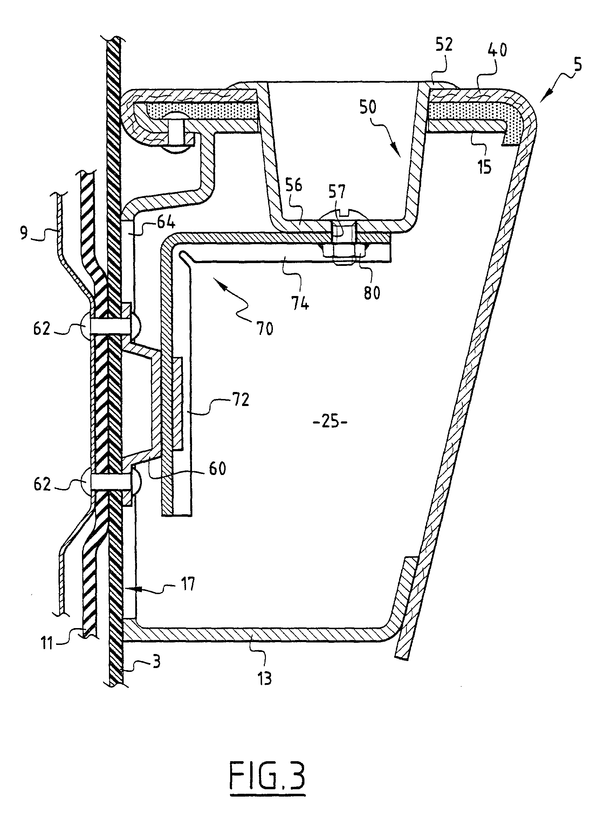

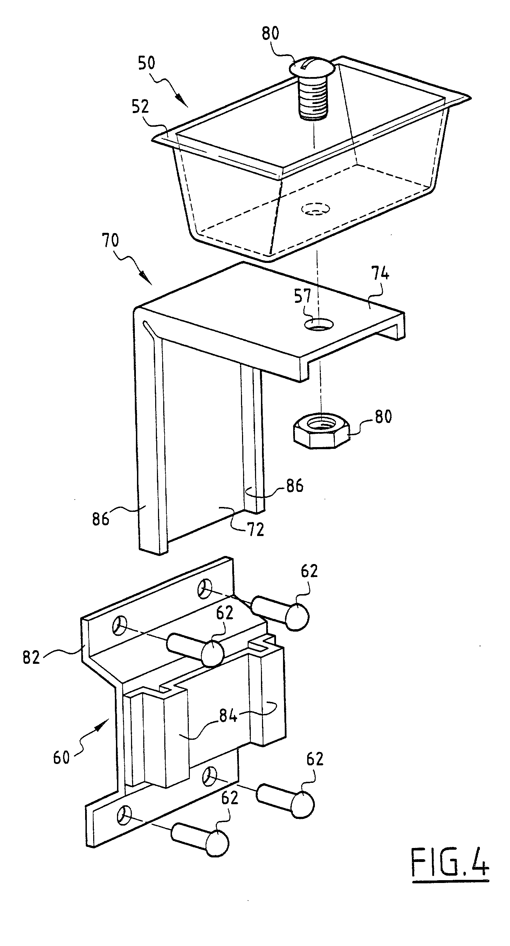

En référence maintenant aux Figures 3 et 4, on va décrire le système mécanique permettant de positionner une poignée de préhension de l'accoudoir 5. Cette poignée d'accoudoir est désignée par la référence générale 50.

La poignée d'accoudoir 50 a la forme d'une coupelle creuse s'insérant dans un évidement complémentaire formé dans la paroi supérieure 15 de l'accoudoir 5. Elle permet à un utilisateur de saisir l'accoudoir en y glissant l'extrémité des doigts, et de fermer la porte de l'intérieur du véhicule en exerçant une traction sur la poignée 50. Afin d'éviter une déformation de l'accoudoir et des efforts d'arrachement trop importants au niveau de ses points de fixation, on prévoit généralement que les efforts exercés sur la poignée d'accoudoir 50 soient directement transmis à la plaque de fixation 9. L'accoudoir suivant l'invention étant réglable en position, il faut donc prévoir une poignée d'accoudoir 50 qui puisse être déplacée solidairement avec l'accoudoir 5, mais également assurer la transmission des efforts de traction vers la plaque de fixation 9.

Dans ce but, la poignée d'accoudoir 50 est emmanchée à force dans l'évidement complémentaire de la coque rigide 13 et maintenue en position au moyen d'une collerette de butée 52 adhérant sur la feuille de revêtement 40. La poignée comporte d'autre part une paroi inférieure 56 présentant un trou 57.

D'autre part, une pièce de guidage 60 est disposée dans le volume intérieur 25 de la coque rigide 13 et solidarisée à la plaque de fixation 9 par des rivets 62 au travers d'une fenêtre 64 pratiquée dans la paroi latérale 17 de la coque rigide 13. Les rivets 62 enserrent, entre la paroi de fixation 9 et la pièce de guidage 60, la feuille d'étanchéité 11 et la garniture d'habillage 3. La pièce de guidage 60 reçoit à coulissement une équerre 70 qui présente un bras vertical 72 et un bras horizontal 74. Le mouvement de coulissement de l'équerre 70 dans la pièce de guidage 60 est libre dans la direction verticale. Le bras horizontal 74 s'étend depuis le plan du bras vertical 72 situé à proximité de la garniture d'habillage 3, jusqu'à une région située au droit du trou 57 de la poignée 50. L'extrémité libre du bras horizontal 74 présente une perforation de dimension correspondante au trou 57 et située au droit de celui-ci. La poignée 50 et l'équerre 70 sont liées rigidement par un boulon 80 coopérant avec le trou 57 de la poignée 50 et la perforation correspondante dans le bras horizontal 74.

Comme on le voit à la Figure 4, la pièce de guidage 60 est essentiellement formée d'une plaque sensiblement verticale 82 solidaire d'une paire de rails 84 verticaux, présentant une section en U.

L'équerre 70 se présente sous la forme d'une plaque pliée à 90°, comprenant des bords latéraux rabattus. Les bords latéraux 86 du bras vertical 72 sont prévus pour coopérer avec des rails 84 respectifs, de façon à coulisser librement dans ces derniers.

On conçoit que ce dispositif mécanique permet de transmettre les efforts de traction horizontaux appliqués sur la poignée d'accoudoir 50 par un utilisateur à la plaque de fixation 9, et ce quelle que soit la position verticale de l'accoudoir 5. En effet, lorsque l'on déplace l'accoudoir verticalement, le bras vertical 72 de l'équerre 70 coulisse dans un sens ou dans l'autre verticalement dans les rails 84 de la pièce de guidage 60, et les efforts de traction horizontaux sont transmis notamment de l'équerre 70 à la pièce de guidage 60.

Le dispositif de réglage d'accoudoir constituant un aspect de l'invention est prévu pour une utilisation occasionnelle, par exemple préalablement à la vente du véhicule, pour adapter la hauteur de l'accoudoir au futur utilisateur, ou a posteriori, pour améliorer le confort de l'utilisateur. En tout cas, un tel dispositif est utilisable lors d'un arrêt du véhicule.

L'invention qui vient d'être décrite permet de concilier les fonctions classiques d'un accoudoir de porte, à savoir la fonction d'appui et de résistance à la traction lors d'une fermeture de porte, avec une fonction de rangement et d'accès à un système de réglage de la position de l'accoudoir.

L'invention permet en outre de répondre aux impératifs d'aspect propres aux aménagements intérieurs de véhicule, ainsi qu'aux impératifs en matière de coûts de fabrication en grande série et de facilité de montage sur véhicules.

## Revendications

1. Accoudoir destiné à être fixé à une paroi intérieure de véhicule automobile, comportant une coque rigide creuse (13) définissant une face supérieure d'appui (15), une face inférieure (16), une première face latérale (17)destinée à coopérer avec la paroi du véhicule, et une deuxième face latérale opposée à la première, tournée vers l'intérieur du véhicule, **caractérisé en ce que** la deuxième face latérale présente une ouverture (27) s'étendant sur l'essentiel de ladite face et donnant un accès au volume intérieur (25) de l'accoudoir (5), et l'accoudoir (5) comporte un organe amovible (40) d'obturation de ladite ouverture.

2. Accoudoir suivant la revendication 1, comportant en outre un revêtement (40) couvrant au moins partiellement la coque rigide, **caractérisé** en ce l'organe amovible d'obturation est formé par une partie du revêtement (40).

3. Accoudoir suivant la revendication 2, **caractérisé en ce que** le revêtement (40) comprend une première partie fixée sur la face supérieure (15) de la coque (13), et une deuxième partie formant ledit organe d'obturation, ladite deuxième partie étant fixée de façon détachable à la coque rigide (13) par des moyens de fixation libérables (45, 46).

4. Accoudoir suivant la revendication 3, **caractérisé en ce que** le revêtement (40) est réalisé dans un matériau souple en feuille.

5. Accoudoir suivant la revendication 3 ou 4, **caractérisé en ce que** les moyens de fixation libérables (45, 46) sont constitués d'au moins un bouton-pression.

6. Porte de véhicule automobile comportant une paroi intérieure sur laquelle est fixée une garniture d'habillage (3) et comportant un accoudoir rapporté (5) suivant l'une quelconque des revendications 1 à 5, **caractérisée en ce que** l'accoudoir (5) est fixé à la paroi intérieure par des moyens de fixation et de positionnement (19, 21, 23) accessibles et manoeuvrables par un utilisateur à travers le volume intérieur (25) de l'accoudoir (5).

7. Porte de véhicule automobile suivant la revendication 6, **caractérisée en ce que** les moyens de fixation et de positionnement (19, 21, 23) de l'accoudoir (5) comprennent un organe (23) solidaire de la paroi destiné à coopérer de façon détachable avec un organe complémentaire (21) solidaire de l'accoudoir (5), ledit organe complémentaire (21) étant susceptible de prendre plusieurs positions sur l'accoudoir (5) par engagement dans des trous (19) ménagés dans la coque (13) de façon à définir plusieurs positions relatives des deux organes (21, 23), et adapté pour être déplacé d'une position à une autre par l'action d'un utilisateur, à travers le volume intérieur (25) de l'accoudoir (5).
